# NEUE EUROPÄISCHE PATENTSCHRIFT

(11) **EP 1 003 012 B3**
(45) Veröffentlichungstag dieser Patentschrift: **20.04.2011**
(45) Hinweis auf die Patenterteilung: 13.05.2009
(21) Anmeldenummer: 99121779.5
(22) Anmeldetag: 03.11.1999
(51) Int. Cl.: G01B 11/02, G01D 5/36

(54) **Optische Positionsmesseinrichtung**
Optical position measuring arrangement
Système optique pour la mesure de position

(30) Priorität: 19.11.1998 DE 19853295; 31.07.1999 DE 19936181
(43) Veröffentlichungstag der Anmeldung: 24.05.2000
(73) Patentinhaber: Dr. Johannes Heidenhain GmbH, 83292 Traunreut (DE)
(72) Erfinder: Holzapfel, Wolfgang, Dr., 83119 Obing (DE); Höfer, Volker, 83371 Stein/Traun (DE); Huber, Walter, 83278 Traunstein (DE)

(56) Entgegenhaltungen:
- EP-A- 0 222 136
- EP-A- 0 453 971
- US-A- 3 671 755

## Beschreibung

Die vorliegende Erfindung betrifft eine optische Positionsmeßeinrichtung, die zur Bestimmung der Relativposition zweier beweglicher Objekte geeignet ist und bei mindestens einer definierten Relativposition der beiden Objekte ein Referenzimpulssignal liefert.

Bekannte optische, inkrementelle Positionsmeßeinrichtungen umfassen zur Bestimmung der Relativlage zweler zueinander beweglicher Objekte in der Regel eine Inkrementalteilungs-Spur auf Seiten eines Maßstabes. Diese Spur wird mit Hilfe einer Abtasteinheit zur Erzeugung von Inkrementalsignalen abgetastet. Ferner ist auch oft die Möglichkeit vorgesehen, sog. Referenzimpulssignale an ein oder mehreren eindeutig definierten Relativpositionen der beiden Objekte zu erzeugen. Zu diesem Zweck ist auf Seiten des Maßstabes benachbart zur Inkrementalteilungs-Spur eine weitere Referenz-Spur angeordnet, die ein oder mehrere Maßstab-Referenzmarkenstrukturen an definierten Positionen umfaßt. Diese Strukturen werden zur Erzeugung der Referenzimpulssignale ebenfalls mit Hilfe einer Abtasteinheit abgetastet.

Die Abtasteinheit umfaßt zu diesem Zweck u.a. eine Abtast-Referenzmarkenstruktur sowie ein oder mehrere optoelektronische Detektorelemente. Die Erzeugung eines Referenzimpulssignales erfolgt hierbei in der Regel dergestalt, daß die Referenzmarkenstrukturen auf Maßstab- und Abtastseite so ausgebildet werden, daß bei der jeweiligen Referenzposition ein Signal erzeugt wird, welches an dieser Position ein Maximum oder Minimum aufweist. Um eine sichere Erfassung des Referenzimpulssignales zu gewährleisten, wird das derart erzeugte Signal mit einem Referenzsignal in Differenz geschaltet und hierzu mit dem Referenzsignal an die beiden Eingänge eines Differenzbildungselementes gelegt. Am Ausgang des Differenzbildungselementes liegt dann ein Signal zur Weiterverarbeitung vor, das die jeweilige Referenzposition identifiziert.
Als Referenz- bzw. Triggersignal für das Differenzbildungselement wird in optischen Positionsmeßsystemen hierbei in der Regel ein sog. Gleichlichtsignal mit konstanter Amplitude verwendet, das aus der optischen Abtastung einer Gleichlichtspur resultiert.

Daneben ist aus der US 4,691,101 auch bekannt, das Referenzsignal als sog. Gegentakt-Referenzimpulssignal zu erzeugen, das einen um 180° phasenversetzten Verlauf zum eigentlichen Takt-Referenzimpulssignal aufweist. Gemäß den Figuren 12A und 12B in der genannten Druckschrift wird dies erreicht, indem in Abhängigkeit einer aperiodischen Abfolge durchlässiger und undurchlässiger Teilbereiche auf dem Maßstab eine entsprechend aperiodische Anordnung einzelner, unmittelbar benachbarter Detektorelemente auf der Abtastseite gewählt wird. Desweiteren erfolgt eine direkte Zuordnung einzelner abtastseitiger Detektorelemente zu durchlässigen oder undurchlässigen Teilbereichen auf Seiten des Maßstabes. Zur Erzeugung des Takt-Referenzimpulssignales werden diejenigen Detektorelemente miteinander verbunden, die den durchlässigen Teilbereichen zugeordnet sind; zur Erzeugung des Gegentakt-Referenzimpulssignales werden hingegen diejenigen Detektorelemente miteinander verbunden, die den undurchlässigen Teilbereichen der Referenzimpuls-Maßstabstruktur zugeordnet sind. Die beiden Signale werden anschließend einem Differenzbildungselement zugeführt, an dessen Ausgang das gewünschte Referenzimpulssignal C zur Weiterverarbeitung anliegt.

Nachteilig an einer derartigen Erzeugung des ausgangsseitigen Referenzimpulssignale ist nunmehr insbesondere, daß die vorgeschlagene Positionsmeßeinichtung mit Maßstab und abtastseitiger Detektoranordnung einen relativ kleinen Abstand zwischen dem Maßstab und der Abtasteinheit erfordert. Dies ist in manchen Anwendungen nicht sicherzustellen. Desweiteren kann aufgrund ungleichmäßigen Streulichteinfalles auf die Detektorelemente eine falsche bzw. variierende Triggerung der erzeugten Referenzimpulssignale erfolgen.

Eine ähnliche Variante zur Erzeugung eines Referenzimpulssignales ist desweiteren auch aus der DE 19512258 bekannt. Auch dortwird eine unmittelbare Zuordnung von flächigen Detektorelementen zu bestimmten Bereichen einer maßstabseitigen Referenzmarkenstrukturvorgesehen. Die Nachteile dieser Anordnung sind identisch zu denjenigen aus der bereits oben diskutierten Druckschrift.

Aus der EP 0 453 971 A2 ist schließlich eine weitere Möglichkeit zur Erzeugung eines Referenzimpulssignals bekannt. Hierbei sind zum einen auf einer Teilscheibe in radialer Richtung zwei benachbart angeordnete Blöcke von Referenzmarkenstrukturen vorgesehen; auf der zugehörigen stationären Abtastplatte sind zu diesen beiden Blöcken gehörende Abtaststrukturen ebenfalls In radialer Richtung benachbart angeordnet. Bei einem der Paare von Referenzmarkenstrukturen sind auf der Teilscheibe und auf der Abtastplatte identisch ausgebildete Strukturen vorgesehen, im anderen Paar komplementär ausgebildete Strukturen. An der Referenzposition resultieren aus diesen beiden Blöcken Signale mit einem Signal-Maximum bzw. einem Signalminimum. Diese Signale werden über ein Differenzbildungselement miteinander verschaltet, an dessen Ausgang dann das eigentliche Referenzimpulssignal anliegt. Nachteilig an dieser Variante ist zum einen, dass zur Abtastung aller Strukturen ein relativ voluminös bauender Abtastkopf nötig ist; zum anderen ergeben sich Probleme bei der korrekten Zuordnung der Inkrementalsignale und des Referenzimpulssignals, wenn die Ausrichtung der zueinander beweglichen Komponenten nicht korrekt erfolgt.

Aufgabe der vorliegenden Erfindung ist es daher, eine optische Positionsmeßeinrichtung zu schaffen, die im Vergleich zum Stand der Technik eine zuverlässigere Erzeugung eines Referenzimpulssignales ermöglicht. Dies soll insbesondere auch im Fall größerer Abtastabstände sowie beim Einfall von Streulicht gewährleistet sein.

Diese Aufgabe wird gelöst durch eine optische Positionsmeßeinrichtung mit den Merkmalen des Anspruches 1.

Vorteilhafte Ausführungsformen der erfindungsgemäßen optischen Positionsmeßeinrichtung ergeben sich aus den Maßnahmen in den abhängigen Patentansprüchen.

Erfindungsgemäß wird nunmehr zur Abtastung von ein oder mehreren Maßstab-Referenzmarkenstrukturen eine bestimmte Abtast-Referenzmarkenstruktur in Verbindung mit definiert angeordneten Detektorelementen eingesetzt. Auf diese Art und Weise läßt sich ein größerer möglicher Abtastabstand realisieren.

Aufgrund des größeren Abtastabstandes ist es nunmehr auch problemlos möglich, die eingesetzten Detektorelemente von deren lichtempfindlichen Seite her mit Hilfe von Bonddrähten elektrisch zu kontaktieren, ohne daß diese aufgrund des geringen Abtastabstandes durch den Maßstab beschädigt werden können.

Zudem ist aufzuführen, daß aufgrund der erfindungsgemäß identisch gewählten Flächen der beiden Gruppen von Blöcken mit den Maßstab- und Abtast-Referenzmarkenstrukturen eine Unempfindlichkeit gegenüber Streulichteinflüssen gewährleiste ist. So beinflußt Streulicht nunmehr alle Signalanteile gliechmäßig, d.h. die um 180° phasenversetzten Signale, die aus den beiden Gruppen von Blöcken abgeleitet werden, werden identisch beeinflußt.

Ferner lassen sich nunmehr im Gegensatz zum diskutierten Stand der Technik einerseits relativ grobe Detektorelemente einsetzen, die keinen großen Fertigungsaufwand erfordern; andererseits ist aber trotzdem eine hochauflösende Erzeugung eines Referenzimpulssignales möglich.

Selbstverständlich kann die erfindungsgemäße optische Positionsmeßeinrichtung sowohl im Auflicht als auch im Durchlicht realisiert werden. Ebenso kann die entsprechende Positionsmeßeinrichtung zur Erfassung von linearen Relativbewegungen sowie zur Erfassung von rotatorischen Relativbewegungen eingesetzt werden.

Weitere Vorteile sowie Einzelheiten der erfindungsgemäßen optischen Positionsmeßeinrichtung ergeben sich aus der nachfolgenden Beschreibung von Ausführungsbeispielen anhand der beiliegenden Zeichnungen.

Dabei zeigt
- Figur 1a 1c: jeweils in schematischer Form eine seit- liche Ansicht eines Ausführungsbei- spieles der erfindungsgemäßen Positi- onsmeßeinrichtung, insbesondere ver- schiedene Auflicht- bzw. Durchlicht-Va- rianten;
- Figur 2: eine Darstellung verschiedener Kompo- nenten eines ersten Ausführungsbei- spieles der Positionsmeßeinrichtung auf Seiten des Maßstabes sowie der Ab- tasteinheit;
- Figur 3: eine Darstellung verschiedener Signale aus dem Ausführungsbeispiel der Figur 2;
- Figur 4: eine Darstellung verschiedener Kompo- nenten eines zweiten Ausführungsbei- spieles der Positionsmeßeinrichtung auf Seiten des Maßstabes sowie der Ab- tasteinheit
- Figur 5: eine Ansicht eines Teiles der Abtastplat- te eines dritten Ausführungsbeispieles sowie die damit resultierende Intensi- tätsverteilung und einen Teil der zuge- hörigen Maßstab-Referenzmarken- struktur.

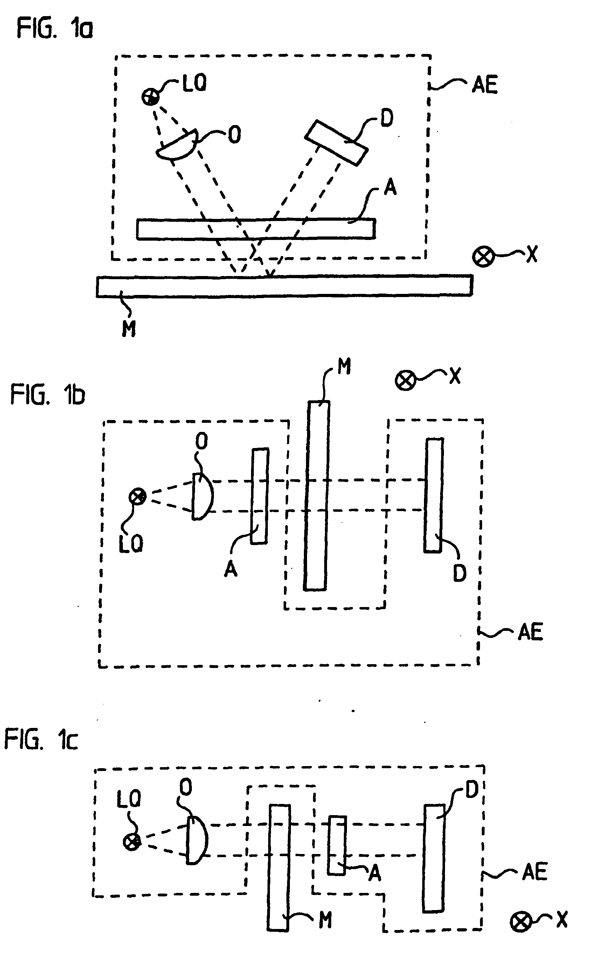

Verschiedene mögliche Ausführungsformen der erfindungsgemäßen optischen Positionsmeßeinrichtung sind in den Figuren 1a - 1c gezeigt. Die einzelnen Varianten unterscheiden sich hierbei insbesondere in der jeweiligen Ausgestaltung als Auflicht-Meßsystem gemäß Figur 1 a bzw. als Durchlicht-Meßsystem gemäß den Figuren 1b und 1c.
Die dargestellten Ausführungsformen der erfindungsgemäßen Positionsmeßeinrichtung umfassen jeweils eine Abtasteinheit AE sowie einen davon abgetasteten Maßstab M. Abtasteinheit AE und Maßstab M sind mit - nicht dargestellten - Objekten verbunden, die relativ zueinander beweglich sind und deren Relativposition mit Hilfe der Positionsmeßeinrichtung exakt bestimmt werden soll. Die Meßrichtung x, d.h. die Richtung in der die Abtasteinheit AE und der Maßstab M jeweils zueinander beweglich sind, ist in allen drei Fällen senkrecht zur Zeichenebene orientiert. Bei den zueinander beweglichen Objekten kann es sich etwa um Werkzeug und Werkstück in einer numerisch gesteuerten Werkezeugmaschine handeln.

Die Abtasteinheit AE der gezeigten Ausführungsbeispiele umfaßt jeweils ein Lichtquelle LQ, eine Optik O, eine Abtastplatte A sowie eine Detektoreinheit D. Desweiteren kann vorgesehen sein, auf Seiten der Abtasteinheit AE bereits verschiedene Signalverarbeitungselemente anzuordnen, die eine Weiterverarbeitung der erzeugten Abtastsignale übernehmen, bevor diese an eine nachgeordnete Auswerteeinheit, beispielsweise eine numerische Werkzeugmaschinensteuerung, übertragen werden.
In den dargestellten Ausführungsbeispielen dient die Optik O zur Kollimation der von der Lichtquelle LQ emittierten Strahlenbündel. Ebenso könnte die Optik O aber auch eine fokussierende bzw. teil-fokussierende Wirkung haben. Daneben können die erfindungsgemäßen Überlegungen selbstverständlich auch in Positionsmeßeinrichtungen realisiert werden, die überhaupt keine Optik zwischen der Lichtquelle LQ und der Abtastplattte A bzw. dem Maßstab M aufweisen, d.h. in Systemen mit einer sog. divergenten Beleuchtung.

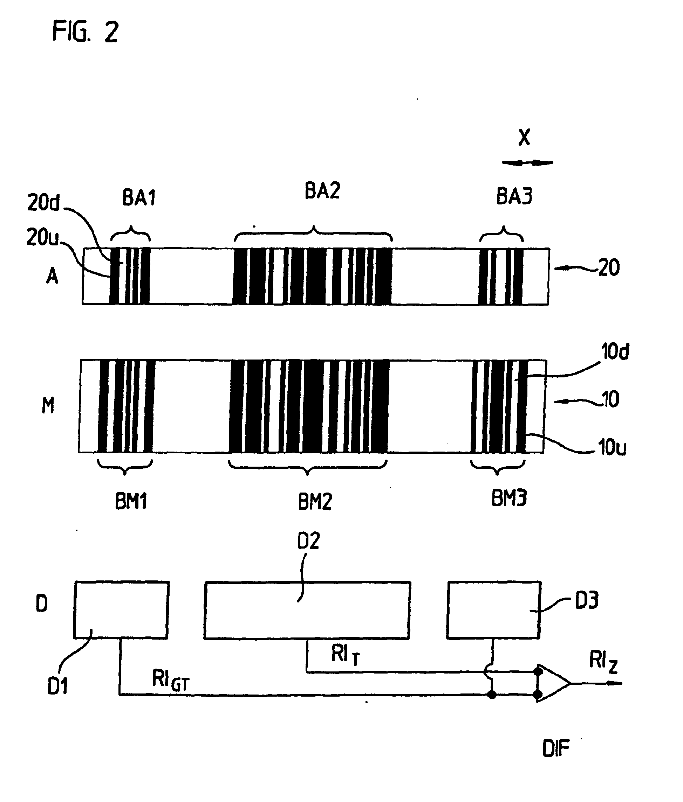

Die verschiedenen Ausführungsformen der erfindungsgemäßen Positionsmeßeinrichtung umfassen maßstabseitig jeweils eine - nicht dargestellte - Inkrementalteilungsspur, aus deren optischer Abtastung in bekannter Art und Weise zwei phasenversetzte Inkrementalsignale resultieren. Desweiteren ist vorgesehen, mit Hilfe der Abtasteinheit AE beim Abtasten des Maßstabes M an ein oder mehreren Stellen entlang der Meßstrecke Referenzimpulssignale zu erzeugen, um derart einen Absolutbezug bei der Positionsmessung herzustellen.
Auf erfindungsgemäße Details insbesondere in Bezug auf die Erzeugung der Referenzimpulssignale und die hierzu erforderlichen Maßnahmen auf Seiten des Maßstabes M, Abtastplatte A sowie der Detektoreinheit D sei nachfolgend bei der Beschreibung der Figuren 2-4 noch detailliert eingegangen.

In Figur 1 a ist eine als Auflichtsystem ausgebildete Ausführungsform der Positionsmeßeinrichtung gezeigt, bei der der Maßstab M bzw. die darauf angeordneten Strukturen zur Erzeugung der verschiedenen Abtastsignale aus alternierenden Teilbereichen bestehen, die reflektierend bzw. nicht-reflektierend ausgebildet sind. Die Abtastplatte A wiederum umfaßt Strukturen, die aus alternierend angeordneten durchlässigen und undurchlässigen Teilbereichen bestehen.

Demgegenüber sind die dargestellten Varianten in den Figuren 1b und 1c als Durchlichtsysteme ausgebildet. Auf dem Maßstab M sind in diesen beiden Fällen Strukturen zur Erzeugung von Abtastsignalen angeordnet, die aus alternierend angeordneten durchlässigen und undurchlässigen Teilbereichen bestehen. Die auf den jeweils zugehörigen Abtastplatten A angeordneten Strukturen sind wiederum analog zum Beispiel in Figur 1 a ausgebildet, d.h. sie bestehen aus alternierend angeordneten, durchlässigen und undurchlässigen Teilbereichen.

Die beiden Durchlicht-Varianten in den Figuren 1 b und 1 c unterscheiden sich lediglich in der Reihenfolge der ausgehend von der Lichtquelle LQ angeordneten Komponenten. So ist gemäß dem Beispiel in Figur 1b vorgesehen, die Abtastplatte A unmittelbar der Lichtquelle LQ und der Optik O nachzuordnen, so daß die Strahlenbündel von der Abtastplatte A anschließend auf den Maßstab M und dann auf die Detektoreinheit D gelangen. Demgegenüber ist im Beispiel der Figur 1c die Anordnung der verschiedenen Komponenten dergestalt, daß die Abtastplatte A unmittelbarvorder Detektoreinheit angeordnet ist und die Strahlenbündel zunächst auf den Maßstab M auftreffen und erst dann auf die Abtastplatte A gelangen, ehe sie über die Detektoreinheit D verfaßt werden.

Während in den drei Figuren 1a - 1c jeweils lineare Positionsmeßeinrichtungen gezeigt sind, ist es selbstverständlich möglich, die nachfolgend erläuterten, erfindungsgemäßen Überlegungen auch auf rotatorische optische Positionsmeßeinrichtungen zu übertragen.

Anhand der Figur 2 sei im folgenden eine erste Ausführungsform der erfindungsgemäßen optischen Positionsmeßeinrichtung näher erläutert, insbesondere die Art und Weise der Erzeugung eines Referenzimpulssignales. So ist im mittleren Teil der Figur 2 eine Maßstab-Referenzmarkenstruktur 10 gezeigt, die aus mehreren, in Meßrichtung benachbart angeordneten Blöcken BM1 - BM3 mit jeweils aperiodischen Abfolgen von Teilbereichen 10d, 10u mit unterschiedlichen optischen Eigenschaften bestehen. Im Fall einer Durchlicht-Konfiguration gemäß Figur 1b sind die hellen Teilbereiche 10d durchlässig ausgebildet, während die dunklen Teilbereiche 10u undurchlässig ausgebildet werden. Im Ausführungsbeispiel der Auflicht-Variante gemäß Figur 1a wären die verschiedenen Teilbereiche 10u, 10d der Maßstab-Referenzmarkenstruktur 10 entsprechend nicht-reflektierend und reflektierend auszubilden etc..

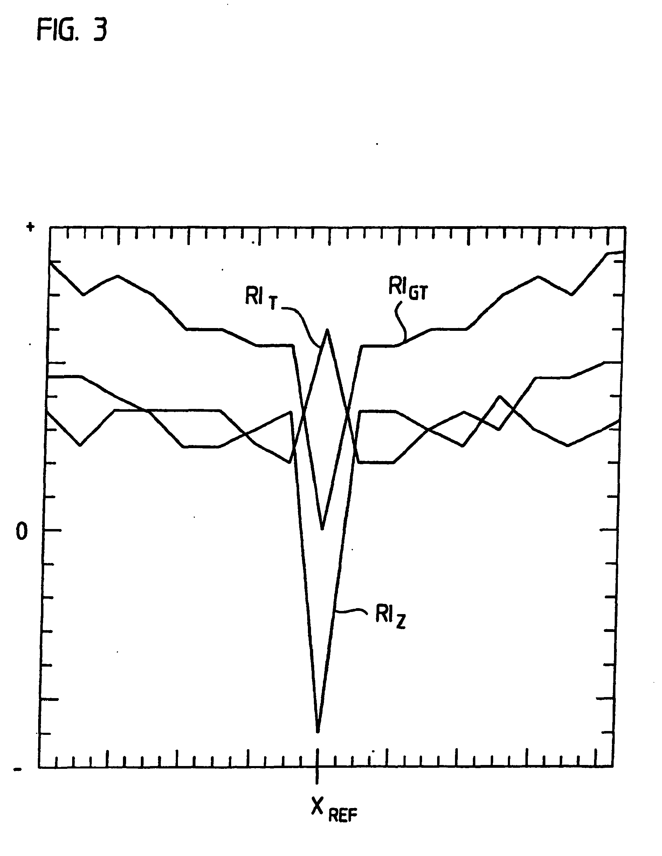

In den nachfolgenden Ausführungsbeispielen der Figuren 2 und 3 seien jeweils Durchlicht-Varianten der erfindungsgemäßen optischen Positionsmeßeinnchtung beschrieben. Selbstverständlich lassen sich die erfindungsgemäßen Überlegungen dabei analog auch auf Auflicht-Systeme übertragen.

Im Ausführungsbeispiel der Figur 2 sind insgesamt drei Blöcke BM1 - BM3 vorgesehen; selbstverständlich können aber auch jederzeit noch mehr als drei Blöcke pro Maßstab-Referenzmarkenstruktur 10 angeordnet werden. Mindestens erfordert die erfindungsgemäße Positionsmeßeinrichtung jedoch n derartige Blökke innerhalb der Maßstab-Referenzmarkenstruktur 10 mit n>2.

Abtastseitig, d.h. auf Seiten der Abtastplatte A ist in der Abtasteinheit AE eine Abtast-Referenzmarkenstruktur 20 vorgesehen, die ebenfalls aus n in Meßrichtung x benachbart angeordneten Blöcken BA1 - BA3 besteht, wobei n = 3 gilt. Es sind dort demzufolge ebensoviele n Blöcke BA1 - BA3 angeordnet wie auf Seiten des Maßstabes M innerhalb der Maßstab-Referenzmarkenstruktur 10. Die Blöcke derAbtast-Referenzmarkenstruktur 20 umfassen wiederum in Meßrichtung x benachbart angeordnete Teilbereiche 20u, 20d mit optisch unterschiedlichen Eigenschaften. Hierbei sind die in derZeichnung hell dargestellten Teilbereiche 20d durchlässig ausgebildet, während die dunkel dargestellten Teilbereiche 20u undurchlässig für die auftreffenden Lichtbündel sind.

In der Darstellung der Figur 2 befindet sich die Abtasteinheit AE bzw. die Abtastplatte A exakt an der zu detektierenden Referenzposition x_{REF}.

Die Ausgestaltung bzw. Anordnung der verschiedenen Blöcke BM1 - BM3 bzw. BA1 - BA3 innerhalb der Maßstab- und Abtast-Referenzmarkenstrukturen ist nunmehr zum einen dergestalt gewählt, daß in mindestens einer ersten Gruppe von Blöcken BM2, BA2 die Anordnung der Teilbereiche 10u, 10d, 20u, 20d auf Seiten der Maßstab- und Abtast-Referenzmarkenstrukturen 10,20 identisch ist. Im dargestellten Ausführungsbeispiel besteht diese Gruppe lediglich aus je einem einzigen Block BM2, BA2 auf Seiten des Maßstabes M und der Abtastplatte A.
Zum anderen ist eine zweite Gruppe von Blöcken BM1, BM3, BA1, BA3 dermaßen ausgebildet, daß die Anordnung der Teilbereiche 10u, 10d, 20u, 20d innerhalb dieser Blöcke BM1, BM3, BA1, BA3 auf Seiten von Maßstab Mund Abtastplatte A komplementär zueinander ist. Unter komplementär sei hierbei in der dargestellten Durchlicht-variante der Figur 2 verstanden, daß im Fall eines durchlässigen Teilbereiches 10d auf Seiten des Maßstabes M ein undurchlässiger Teilbereich 10u an der entsprechenden Stelle auf Seiten der Abtastplatte A anzuordnen ist usw..

Im Auflichtfall mit einem Reflexionsmaßstab gemäß Figur 1 a hingegen werden in der ersten Gruppe den reflektierenden Teilbereichen auf dem Maßstab durchlässige Teilbereiche auf der Abtastplatte zugeordnet und den nicht-reflektierenden Teilbereichen auf dem Maßstab undurchlässige Teilbereiche auf der Abtastplatte. Bei der komplementären Anordnung der Teilbereiche innerhalb der zweiten Gruppe ist bei der Aufilchtvariante hingegen vorgesehen, den nicht-reflektierenden Teilbereichen auf dem Maßstab jeweils durchlässige Teilbereiche auf der Abtastplatte zuzuordnen und den reflektierenden Teilbereichen auf dem Maßstab nicht-durchlässige Teilbereiche auf der Abtastplatte.

Jedem der verschiedenen Blöcke BA1 - BA3 innerhalb der Abtast-Referenzmarkenstruktur ist desweiteren ein flächiges optoelektronisches Detektorelement D1 - D3 in fester räumlicher Beziehung In der Abtasteinheit AE zugeordnet, über das die Lichtbündel erfaßt werden, die von der Lichtquelle LQ ausgehend über Abtastplatte A und Maßstab M darauf aufreffen. Jedes der Detektorelemente D1 - D3 hat hierbei eine lichtempfindliche Fläche bzw. eine Ausdehnung in Meßrichtung x, die einem Vielfachen der Breite der verschiedenen Teilbereiche 10u, 10d innerhalb der Referenzmarkenstrukturen auf dem Maßstab M bzw. auf der Abtastplatte A entspricht.

Desweiteren ist in dieser Variante vorgesehen, daß die Flächen der Blöcke BA1 - BA3, BM1 - BM3 der beiden Gruppen dergestalt gewählt werden, daß für beide Gruppen im wesentlichen gleich große Flächen resultieren. Im dargestellten Ausführungsbeispiel der Figur 2 bedeutet dies etwa, daß die Summe der beiden Flächen der Blöcke BA1 bzw. BM1 und BA3 bzw. BM3 identisch zur Fläche des Blockes BA2 bzw. BM2 gewählt wird.

Ferner sind die Flächen der Detektorelemente D1 - D3, die den beiden Gruppen zugeordnet sind, im wesentlichen gleich groß gewählt. Im Ausführungsbeispiel der Figur 2 sind die addierten, lichtempfindlichen Flächen derbeiden Detektorelemente D1 und D3 im wesentlichen identisch mit der Fläche des Detektorelementes D2. Desweiteren werden die Flächen der einzelnen Detektorelemente D1 - D3 jeweils so dimensioniert, daß diese etwas größer als die zugeordneten Flächen der Blöcke BA1 - BA3 sind. Derart läßt sich sicherstellen, daß bei eventuellen, geringfügigen Verkippungen von Maßstab M und Abtasteinheit AE bzw. Abtastplatte A die Zuordnung der verschiedenen Blöcke Ba1 - BA3 zu den jeweiligen Detektorelementen D1- D3 gewährleistet bleibt.

Den einzelnen Detektorelementen D1 - D3 der verschiedenen Gruppen sind im Gegensatz zum Stand der Technik aus der US 4,691,101 erfindungsgemäß nunmehr Blöcke auf Seiten des Maßstabes M bzw. der Abtastplatte A zugeordnet, die eine interne Strukturierung aufweisen. Pro Block BA1 - BA3 bzw. BM1 - BM3 sind hierzu eine Vielzahl von Teilbereichen 20d, 20u, 10d, 10u mit unterschiedlichen optischen Eigenschaften vorgesehen. Durch diese Maßnahme läßt sich Insbesondere die gewünschte Breite des letztlich erzeugten Referenzimpulssignales geeignet einstellen.
Die gewünschte Verschmutzungsunempfindlichkeit bei der erfindungsgemäßen Erzeugung des Referenzimpulssignales resultiert aus der Block-Grobstruktur auf Seiten des Maßstabes und der Abtasteinheit und der entsprechenden Zuordnung und Verschaltung der Detektorelemente.

Die verschiedenen Detektorelemente D1 - D3 werden erfindungsgemäß hierbei derart verschaltet, daß jeweils die Detektorelemente D1 - D3, die einer Gruppe zugeordnet sind, miteinander additiv verschaltet werden. Im Ausführungsbeispiel der Figur 2 werden hierzu die Detektorelemente D1 und D3 in Summe verschaltet und das Summensignal auf den invertierenden Eingang eines Differenzbildungselementes DIF gelegt, das als Operationsverstärker ausgebildet ist. Da zur zweiten Gruppe lediglich ein einziges Detektorelement D2 gehört, wird dieses mit keinem weiteren Detektorelement verschaltet, sondern auf den nicht-invertierenden Eingang des Differenzbildungselementes DIF gelegt. Die derart erzeugten Signale RI_{T} bzw. RI_{GT} der beiden Gruppen weisen nunmehr bei der Referenzposition x_{REF} je-wells ein Maximum oder ein Minimum auf; entsprechend resultiert ein Referenzimpulssignal RI_{Z} am Ausgang des Differenzbildungselementes DIF, welches ein Maximum oder Minimum an der Referenzposition x_{REF} aufweist. So liegt bei einer Durchlicht-Variante gemäß Figur 1b aufgrund der Ausgestaltung der Maßstab-Referenzmarkenstruktur 10 und der Abtast-Referenzmarkenstruktur 20 bei den Detektorelementen D1 und D3 der ersten Gruppe abgeleiteten Signal RI_{GT} ein Minimum an der Referenzposittion x_{REF} vor das aus dem Detektorelement D2 der zweiten Gruppe erzeugte Signal RI_{T} wiederum besitzt an der Position x_{REF} ein Maximum.
An dieser Stelle sei darauf hingewiesen, daß die Signalverläufe von RI_{T} und RI_{GT} selbstverständlich auch anders herum gewählt werden können, d.h. die Ausgestaltung der verschiedenen Strukturen auf Maßstab- und Abtastseite kann im Rahmen der vorliegenden Erfindung geeignet abgewandelt werden usw..

Das Ausführungsbeispiel in Figur 2, bei dem relativ feine Referenzmarkenstrukturen 10, 20 auf Seiten von Maßstab M und Abtastplatte A in Verbindung mit relativ grob-strukturierten Detektorelementen D1 - D3 eingesetzt werden, eignetsich insbesonderefüroptische Positionsmeßeinrichtungen, bei denen eine große Divergenz der von der Lichtquelle LQ emittierten Strahlenbündel vorliegt. Beispielsweise wäre der Einsatz in Verbindung mit einer optischen Positionsmeßeinrichtung mit divergenter Beleuchtung möglich, wie sie in der DE 197 26 935 der Anmelderin beschrieben ist. Die groben, räumlich gut getrennten Detektorelemente D1 - D3 verhindern hierbei ein unerwünschtes optisches Übersprechen zwischen benachbarten Detektorelementen. Vorteilhaft ist ferner, daß keine extreme Feinstrukturierung auf der Seite der Detektoreinheit D nötig ist, was ansonsten hohen fertigungstechnischen Aufwand erfordern würde.

Die Verläufe der beiden im Ausführungsbeispiel der Figur 2 erzeugten Signale RI_{T} und RI_{GT} im Bereich der Referenzposition X_{REF} sind in Figur 3 schematisch dargestellt.

Die beiden Signale RI_{T} und RI_{GT} werden zur Erzeugung eines weiterverarbeitbaren Referenzimpulssignales RI_{Z} schließlich auf die beiden Eingänge eines Differenzbildungselementes DIF geschaltet, in dem letztlich die beiden Eingangssignale RI_{T} und Ri_{GT}voneinander subtrahiert werden bzw. die Differenzbildung aus diesen beiden Signalen erfolgt. Am Ausgang des Differenzbildungselementes DIF resultiert das gewünschte Referenzimpulssignal RI_{Z}, das zur Weiterverarbeitung an eine Auswerteeinheit übergeben werden kann. Das resultierende Referenzimpulssignal RI_{Z} ist ebenfalls in Figur 3 angedeutet.

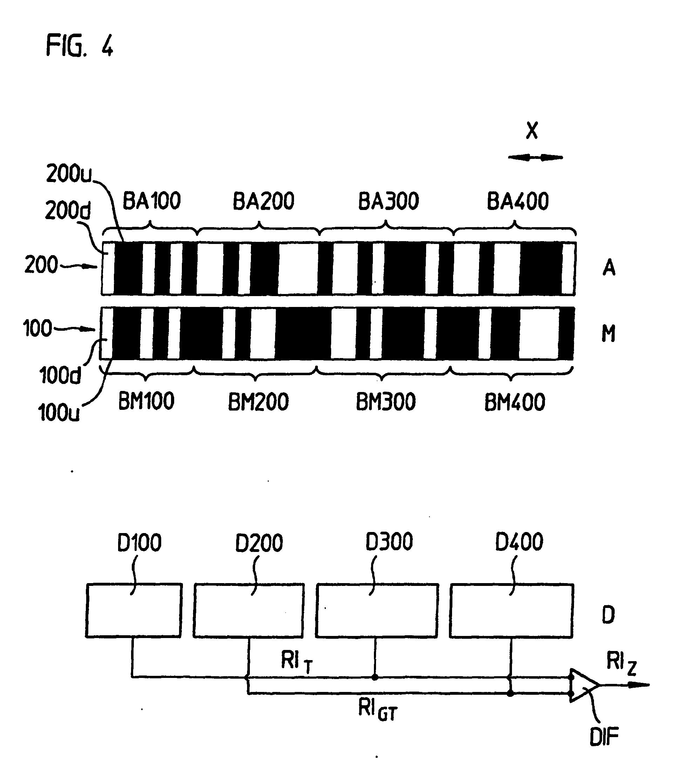

Ein weiteres Ausführungsbeispiel In Bezug auf die erfindungsgemäße Erzeugung des Referenzimpulssignales wird anschließend anhand der Figur 4 erläutert. Diese zeigt einen Teil der verschiedenen Strukturen auf Seiten der Abtasteinheit bzw. Abtastplatte A, des Maßstabes M sowie einen Teil der Anordnung der Detektorelemente Innerhalb der Detektoreinheit D. Wiederum ist auf Seiten der Abtastplatte A bzw. der Abtasteinheit AE eine Abtastreferenzmarkenstruktur 200 vorgesehen, die aus zwei Gruppen von Blöcken BA100 - BA400 besteht, die sich wiederum aus den Teilbereichen 200u, 200d mit unterschiedlichen optischen Eigenschaften zusammensetzen, die in Meßrichtung x aufeinanderfolgend benachbart angeordnet sind.

Auf der Seite des Maßstabes M ist eine Maßstab-Referenzmarkenstruktur 100 angeordnet, die aus zwei Gruppen von Blöcken BM100 - BM400 bestehen und Teilbereiche 100u, 100d mit unterschiedlichen optischen Eigenschaften umfassen.
In Bezug auf die verschiedenen Ausgestaftungsmöglichkeiten der jeweiligen Referenzmarkenstrukturen 100, 200 bei Durchlicht und Auflicht-Systemen sei auf die obigen Ausführungen zu Figur 2 verwiesen.

Im Ausführungsbeispiel der Figur 4 umfaßt jede der beiden Gruppen von Blöcken auf Abtast- und Maßstabseite nunmehr eine Vielzahl von Blöcken, von denen in Fig. 4 jedoch nur ein Teil dargestellt ist. So gehören auf der Abtastplatte A zur ersten Gruppe unter anderem die Blöcke BA100 und BA300, zur zweiten Gruppe gehören unter anderem die Blöcke BA200 und BA400. Der ersten Gruppe sind auf dem Maßstab unter anderem die beiden Blöcke BM100 und BM300 zugeordnet, zur zweiten Gruppe gehören unter anderem die Blöcke BM200 und BM400.

Den Blöcken BA100- BA400 in der Abtasteinheft bzw. auf der Abtastplatte A sind wiederum die flächigen Detektorelemente D100 - D400 der Detektoreinheit D in fester räumlicher Beziehung zugeordnet, d.h. dem Block BA100 ist das Detektorelement D100 zugeordnet, dem Block BA200 das Detektorelement D200, dem Block BA300 das Detektorelement D300 und dem Block BA400 das Detektorelement D400. Analoges gilt für die weiteren, nicht daregstellten Blöcke.

Die erste Gruppe von Blöcken BA100, BA300 auf Seiten der Abtastplatte A ist wiederum identisch zu den zugehörigen Blöcken BM100, BM300 ausgebildet; die zweite Gruppe von Blöcken BA200, BA400 auf Seiten der Abtastplatte ist erneut komplementär zur zugehörigen Gruppe von Blöcken BM200, BM400 auf dem Maßstab ausgebildet usw..

Ebenso wie im vorherigen Ausführungsbeispiel sind die Flächen der Detektorelemente D100, D300 identisch mit den Flächen der Detektorelemente D200, D400. Aufgrund dieser Maßnahme ergibtsich wie im vorherigen Ausführungsbeispiel der Vorteil, daß sich die den unterschiedlichen Eingängen der nachgeordneten Differenzbildungselemente zugeordneten Detektorelemente bezüglich ihres Frequenzganges identisch verhalten.

Analog zu den erfindungsgemäßen Überlegungen des ersten Ausführungsbeispieles ist auch im zweiten Ausführungsbeispiel der Figur 4 vorgesehen, jeweils die Detektorelemente einer Gruppe von Blöcken zu verschalten, d.h. die Detektorelemente D100 und D300 sowie die Detektorelemente D200 und D400. Aus den beiden Gruppen von Detektorelementen resultieren in der dargestellten Art und Weise das sog. Takt-Referenzimpulssignal RI_{T} sowie das Gegentakt-Referenzimpulssignal RI_{GT}. Das Signal RI_{T} weist an der Referenzposition wiederum ein Maximum auf; das Signal RI_{GT} ein Minimum. Die Signale RI_{T}, RI_{GT} werden den beiden Eingängen eines Differenzbildungselementes DIF zugeführt, wo wiederum die Differenzbildung aus den beiden Signalen RI_{T}, RI_{GT} stattfindet. Am Ausgang des Differenzbildungselementes DIF resultiert das zur Weiterverarbeitung geeignete Referenzimpulssignal RI_{Z}. Die Differenzbildung stellt ferner ebenso wie im ersten Ausführungsbeispiel sicher, daß eventuelle Streulichteinflüsse eliminiert werden können.

Im Unterschied zur Anordnung in Figur 2 sind auf der Abtastplatte A sowie auf dem Maßstab M die jeweiligen Referenzmarkenstrukturen 100, 200 in deutlich geringerem Abstand zueinander angeordnet, so da0 letztlich auch mehr Blöcke über die gesamte Länge der kompletten Referenzmarkenstruktur angeordnet werden können. Im Gegensatz zur Variante in Figur 2 eignet sich dieses Ausführungsbeispiel deshalb insbesondere für optische Positionsmeßsysteme mit kleiner beieuchtungsseitiger Divergenz, da die verschiedenen Gruppen von Blöcken bzw. Detektorelementen relativ eng benachbart zueinander angeordnet sind. Ein eventuelles Übersprechen zwischen benachbarten Blöcken bzw. Detektorelementen ist hierbei aufgrund der geringen beleuchtungsseitigen Divergenz ausgeschlossen.

Die erläuterten Ausführungsbeispiele der Figuren 2 und 4 umfaßten sowohl auf Maßstab- wie auch auf Abtastseite Referenzmarkenstrukturen, die als reine Amplitudenstrukturen ausgebildet sind. Die abwechselnd angeordneten Teilbereiche der verschiedenen Strukturen waren hierbei entweder durchlässig und undurchlässig bzw. reflektierend und nicht-reflektierend ausgelegt. Mit derartigen Amplitudenstrukturen läßt sich bei hinreichend großen Teilungsperioden der jeweiligen Strukturen erfindungsgemäß ein Referenzimpulssignal erzeugen. So ist bei Teilungsperioden TP = 200µ ein konrtrastreiches Referenzimpulssignal auf erfindungsgemäße Art und Weise erzeugbar. Sobald jedoch feinere Strukturen mit kleineren Teilungsperioden zum Einsatz kommen, etwa eine Teilungsperiode TP ≈ 20µm, ist bei den in der Praxis oft erforderlichen Abtastabständen von mehr als 0,5mm eine hinreichend gute Abbildung der abtastseitigen Referenzmarkenstrukturen auf die maßstabseitigen Referenzmarkenstrukturen nicht mehr möglich. Es spielen vielmehr zunehmend Beugungseffekte eine Rolle, so daß in der Ebene der Maßstab-Referenzmarkenstrukturen aufgrund von Beugungseffekten Intensitätsverteilungen vorliegen, die von der dort vorausgesetzten Intensitätsverteilung abweichen.
Im Rahmen der vorliegenden Erfindung ist es aber möglich, auch bei kleineren Teilungsperioden der eingesetzten Referenzmarkenstrukturen und größeren Abtastabständen eine Erzeugung eines Referenzimpulssignales auf Grundlage der vorab erläuterten Prinzipien zu realisieren. Dies sei anhand einerAuflicht-Variante der erfindungsgemäßen optischen Positionsmeßeinrichtung erläutert, deren grundsätzlicher optischer Aufbau etwa in Figur 1a skizziert ist.
Aufgrund der erwähnten Beugungseffekte kann nunmehr keine Abtast-Referenzmarkenstruktur in Form einer reinen Amplitudenstruktur eingesetzt werden, wie sie beispielsweise anhand von Figur 2 erläutert wurde. Im Fall einer vorgegebenen Maßstab-Referenzmarkenstruktur 100, die grundsätzlich als Amplitudenstruktur wie die Variante in Figur 2 aussehen kann, wird die Abtast-Referenzmarkenstruktur deshalb in dieser Ausführungsform dahingehend abgewandelt, daß keine reine Amplitudenstruktur wie in Figur 2 mehr verwendet wird; vielmehr ist vorgesehen, die Abtast-Referenzmarkenstruktur als Phasenstruktur oder als kombinierte Amplituden-/Phasenstrukturauszubilden, die an der Referenzposition x_{REF} in der Ebene der Maßstab-Referenzmarkenstruktur 10 letztlich das gleiche Bild bzw. die gleiche Intensitätsverteilung liefert wie die in Figur 2 beschriebene Amplitudenstruktur der Abtast-Referenzmarkenstruktur 20. Es muß demzufolge gewährleistet sein, daß in den Bereichen des Blockes BM2 an der Referenzposition x_{REF} eine Intensitätsverteilung resultiert, die der Maßstab-Referenzmarkenstruktur in diesem Block BM2 entspricht. In den Bereichen der Blöcke BM1 und BM3 hingegen muß die auf der Abtastseite erforderliche Phasenstruktur dagegen gewährleisten, daß bei der Referenzposition X_{REF} eine Intensitätsverteilung in der Maßstabebene resultiert, die komplementärzur Maßstab-Referenzmarkenstruktur in diesen Bereichen ist. Auf der Detektorseite können die verschiedenen Detektorelemente D1 - D3 dann wieder wie gezeigt verschaltet werden.

Für den einschlägigen Fachmann stellt die Ausgestaltung einer entsprechenden Phasenstruktur oder aber einer kombinierten Phasen-/Amplitudenstruktur auf der Seite der Abtastplatte kein weiteres Problem dar, vergleichbare Aufgabenstellungen sind etwa auch im Zusammenhang mit der holographischen Erzeugung definierter Intensitätsmuster bekannt. Hierzu sei z.B. auf das Kapitel 7.3.3.3 des Lehrbuches "Optik" von M.V. Klein, T.E. Furtak, Springer Verlag 1986 (S. 381 - 389) verwiesen.

Auf diese Art und Weise ist somit die Ausgestaltung einer Phasenstruktur oder aber einer kombinier ten Phasen-/Amplitudenstruktur problemlos möglich, wenn eine gewünschte Intensitätsverteilung in einer bestimmten Ebene vorgegeben wird. Dies sei nachfolgend an einem einfachen Beispiel beschrieben.

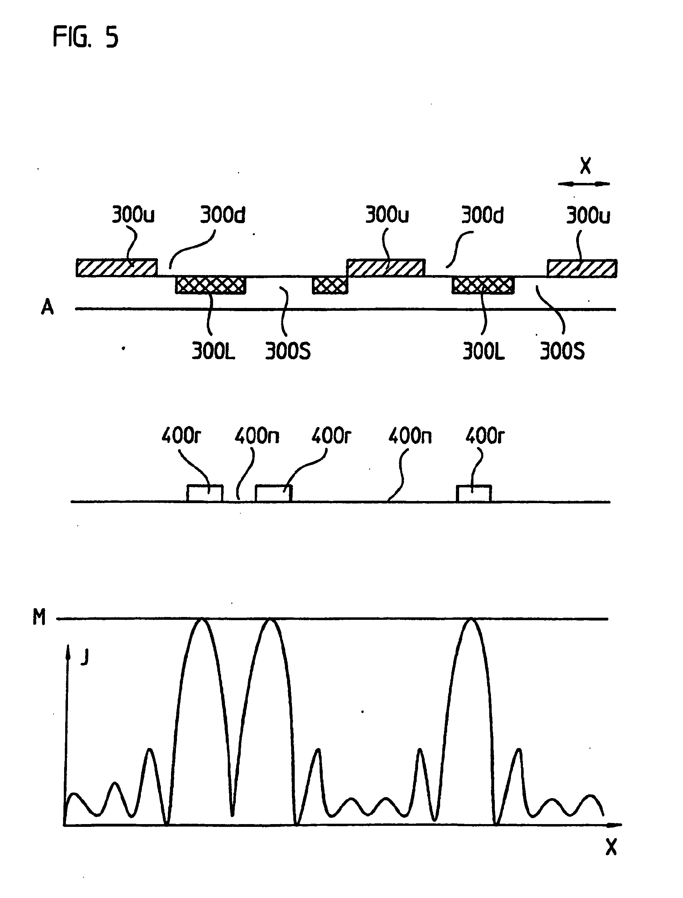

So zeigt Figur 5 im oberen Teil einen Schnitt durch die Abtastplatte A dieses Ausführungsbeispieles der erfindungsgemäßen optischen Positionsmeßeinrichtung. Der dargestellte Ausschnitt ist ein Teil der Abtast-Referenzmarkenstruktur 300, die nunmehr als kombinierte Phasen-/Amplitudenstruktur ausgebildet ist, die in der Maßstabebene eine bestimmte vorgegebene Intenskätsverteilung liefert. Die Abtast-Referenzmarkenstruktur 300 besteht In diesem Beispiel aus einer groben Amplitudenstruktur mit alternierend in Meßrichtung x angeordneten, durchlässigen und undurchlässigen Teilbereichen 300d, 300u. In den durchlässigen Teilbereichen 300d sind jedoch desweiteren phasenschiebende Strukturen, z.B. Zylinderlinsen, in definierter Art und Weise angeordnet. Die phasenschiebenden Strukturen sind in den durchlässigen Teilbereichen 300d als alternierend in Meßrichtung x aufeinanderfolgende Stege 300S und Lücken 300D ausgebildet.
Der in Figur 5 gezeigte Ausschnitt der nunmehr als Phasen-/Amplitudenstruktur ausgebildeten Abtast-Referenzmarkenstruktur 300 ist an der Referenzposition x_{REF} einem bestimmten Teil der Maßstab-Referenzmarkenstruktur 400 auf Seiten des Maßstabes M zugeordnet. Dieser Bereich des Maßstabes M bzw. der entsprechenden Referenzmarkenstruktur 400 ist unterhalb der Abtast-Referenzmarkenstruktur 300 gezeigt. Diese stellt etwa einen Ausschnitt aus einem Block der Maßstab-Referenzmarkenstruktur 400 dar, In dem eine lntensitätsverteilung erzeugt werden soll, die der Maßstab-Referenzmarkenstruktur 400 entspricht. Die Maßstab-Referenzmarkenstruktur 400 besteht hierbei im Auflicht-Fall aus alternierend angeordneten reflektierenden Teilbereichen 400r und nicht-reflektierenden Teilbereichen 400n. Analog zu den oben erläuterten Überlegungen muß demzufolge in diesem Block in den reflektierenden Teilbereichen 400r ein Intensitätsmaximum an der Referenzposition x_{REF} resultieren, während in den dazwischenliegenden nicht-reflektierenden Teilbereichen 400n ein Intensitätsminimum erforderlich ist.

Die im oberen Teil der Figur 5 gezeigte Phasen-/Amplitudenstruktur liefert nunmehr genau eine derartige Intensitätsverteilung, wie dies im unteren Teil von Figur 5 gezeigt ist. Dort ist gegen die Meßrichtung x die resultierende Intensitätsverteilung des Ausschnittes der Abtast-Referenzmarkenstruktur 300 gezeigt, die die erforderlichen Intensitätsmaxima an den reflektierenden Teilbereichen 400r der Maßstab-Referenzmarkenstruktur 400 erzeugt.

Durch die geeignete Ausgestaltung der kompletten Abtast-Referenzmarkenstruktur als reine Phasenstruktur oder aber als kombinierte Phasen-/Amplitudenstruktur läßt sich somit auch im Fall kleinerer Tellungsperioden und einem erforderlichen größeren Abtastabstand auf die erfindungsgemäße Art und Weise ein kontratsreiches Referenzimpulssignal erzeugen.

Die bislang erläuterten Ausführungsbeispiele der optischen Positionsmeßeinrichtung lassen sich selbstverständlich im Rahmen der vorliegenden Erfindung auf verschiedenste Arten abwandeln.

So wurde in den Ausführungsbeispielen der Figuren 2 - 5 jeweils erläutert, daß je nach Ausgestaltung der Strukturen auf Seiten der Abtastplatte A eine bestimmte Intensitätsverteilung auf dem Maßstab M resultiert. Diese Anordnung ist jedoch keineswegs die einzig mögliche; vielmehr kann in einer Variante wie sie etwa in Figur 1c skizziert ist auch eine Ausgestaltung der verschiedenen Blöcke der Maßstab-Referenzstrukturen dergestalt erfolgen, daß nunmehr in der Ebene der Abtastplatte die entsprechende Intensitätsverteilung resultiert. Hierbei können auf Seiten des Maßstabes wiederum reine Amplitudenstrukturen, reine Phasenstrukturen oder aber Mischformen hiervon eingesetzt werden etc..

Desweiteren kann etwa jederzeit vorgesehen werden, daß die beiden Gruppen von Referenzmarkenstrukturen jeweils mehrals zwei Blöcke mit entsprechend angeordneten Teilbereichen umfassen. Dies hat Vorteile hinsichtlich der Verschmutzungsunempfindlichkeit, da die Verschmutzung eines Blockes dann durch die Vielzahl weiterer Blöcke in der gleichen Gruppe kompensiert wird. Insgesamt resultiert derart eine stabilere Referenzimpulsauswertung.
Während in den beschriebenen Ausführungsbeispielen jeweils fürdie Referenzimpulssignal-Erzeugung spezielle Detektoranordnungen mit relativ großflächigen Detektorelementen genutzt wurden, ist prinzipiell auch denkbar, an dieser Stelle sog. Detektorarrays in der Detektoreinheit einzusetzen, wie sie zur optischen Abtastung einer Inkrementalteilungsspur bekannt sind. Derartige Detektorarrays bestehen aus einer Vielzahl von unmittelbar benachbart in Meßrichtung angeordneten strahlungsempfindlichen Detektorelementen mit deutlich kleineren Flächen; Detektorelemente, die phasengleiche Abtastsignale liefern sind hierbei miteinander elektrisch verschaltet. Solche Detektorarrays können prinzipiell auch im Rahmen der vorliegenden Erfindung genutzt werden. Hierbei würden die Detektorelemente in der Detektoreinheit dann jeweils aus einer zusammengeschalteten Anzahl benachbarter einzelner Detektorelemente des Detektorarrays bestehen. Als Vorteil an einer derartigen Variante wäre die Reduzierung der Bauteilvielfalt anzuführen.

## Patentansprüche

1. Optische Positionsmeßeinrichtung zur Bestimmung der Relativposition zweier in Meßrichtung (x) zueinander beweglicher Objekte, wobei an mindestens einer definierten Relativposition (x_{REF}) ein Referenzimpulssignal (RI_{Z}) erzeugbar ist und die Positionsmeßeinrichtung folgende Komponenten umfaßt:
a) ein Maßstab (M) mit einer Maßstab-Referenzmarkenstruktur (10; 100; 400), wobei der Maßstab (M) mit einem der beiden Objekte verbunden ist und die Maßstab-Referenzmarkenstruktur (10; 100; 400) aus n > 2 in Meßrichtung (x) benachbart angeordneten Blöcken (BM1, BM2, BM3; BM100, BM200, BM300, BM400) besteht, die in Meßrichtung (x) aufeinanderfolgende Anordnungen von mehreren Teilbereichen (10d, 10u; 100d, 100u; 400r, 400n) mit unterschiedlichen optischen Eigenschaften aufweisen,
b) eine Abtasteinheit (AE), die mit dem anderen Objekt verbunden ist und eine Abtastplatte (A) mit einer Abtast-Referenzmarkenstruktur (20; 200; 300) sowie mehrere Detektorelemente (D1, D2, D3; D100, D200, D300, D400) umfaßt, wobei
b1) die Abtast-Referenzmarkenstruktur (20; 200; 300) ebenfalls aus n Blöcken (BA1, BA2, BA3; BA100; BA200, BA300, BA400) besteht, die in Meßrichtung (x) benachbart aufeinanderfolgend angeordnet sind und
b2) wobei mindestens eine erste Gruppe der Blöcke (BA2, BA100, BA300; BM2, BM100, BM300) der Abtast-Referenzmarkenstruktur (20; 200; 300) oder der Maßstab-Referenzmarkenstruktur (10; 100; 400) derart ausgebildet ist, daß diese an der Referenzposition (x_{REF}) bei einer Beleuchtung durch eine Lichtquelle (LQ) in der Ebene der jeweils anderen Referenzmarkenstruktur eine Intensitätsverteilung liefert, die identisch zur Struktur zugehöriger erster Gruppe von Blöcken (BA2, BA100, BA300; BM2, BM100, BM300) der Abtast- oder Maßstab-Referenzmarkenstruktur (20; 200; 300; 10; 100; 400) ist und mindestens eine zweite Gruppe der Blöcke (BA1, BA3, BA200, BA400; BM1, BM3, BM200, BM400) der Abtast- oder Referenzmarkenstruktur (20; 200; 300; 10; 100; 400) bei einer Beleuchtung durch eine Lichtquelle (LQ) in der Ebene der jeweils anderen Referenzmarkenstruktur eine Intensitätsverteilung liefert, die komplementär zur Struktur der zugehörigen Blöcke (BA1, BA3, BA200, BA400; BM1, BM3, BM200, BM400) der Abtast- oder Maßstab-Referenzmarkenstruktur (20; 200; 300; 10; 100; 400) ist, wobei eine der beiden Gruppen mindestens zwei Blöcke (BA1, BA3, BA100, BA300; BM1, BM3, BM100, BM300) umfasst und
b3) jedem Block (BA1 - BA3; BA100 - BA400) aus der Abtast-Referenzmarkenstruktur (20; 200; 300) ein Detektorelement (D1 - D3; D100 - D400) zugeordnet ist und
b4) die Detektorelemente (D1 - D3; D100, D400) derart verschaltet sind, daß jeweils die Ausgangssignale (RI_{T}, RI_{GT}) einer Block-Gruppe miteinander verbunden sind, wozu die Detektorelemente (D1, D3; D100 - D400) aus Gruppen mit mehreren Blöcken (BA1, BA3, BA100, BA300; BM1, BM3, BM100, BM300) additiv miteinander verschaltet sind, so daß aus den Ausgangssignalen jeder Block-Gruppe jeweils ein Referenzimpuls-Ausgangssignal (RI_{T}, RI_{GT}) resultiert, das bei einer definierten Relativposition (X_{REF}) der beiden Objekte ein Maximum oder ein Minimum aufweist.

2. Optische Positonsmeßeinrichtung nach Anspruch 1, wobei die Abtast-Referenzmarkenstruktur (20; 200) als reine Amplitudenstruktur ausgebildet ist, die in jedem Block (BA1 - BA3; BA100 - BA400) eine Anordnung von Teilbereichen (20d, 20u; 200d, 200u) mit unterschiedlichen optischen Eigenschaften umfaßt, wobei in einer ersten Gruppe von Blöcken (BA1, BA3; BA100, BA300) die Anordnung der Teilbereiche (20d, 20u; 200d, 200u) identisch zur Anordnung der Teilbereiche (10d, 10u; 100d, 100u) in den zugehörigen Blöcken (BM1, BM3; BM100, BM300) der Maßstab-Referenmarkenstruktur (10; 100) ist und in mindestens einer zweiten Gruppe von Blöcken (BA2; BA200, BA400) die Anordnung der Teilbereiche (20d, 20u; 200d, 200u) komplementär zu der Anordnung der Teilbereiche (10d, 10u; 100d, 100u) in den zugehörigen Blöcken (BM2; BM200, BM400) der Maßstab-Referenzmarkenstruktur (10; 100) ist.

3. Optische Positonsmeßeinrichtung nach Anspruch 1, wobei die Abtast-Referenzmarkenstruktur (300) als Phasenstruktur oder als kombinierte Phasen-/Amplitudenstruktur ausgebildet ist.

4. Optische Positionsmeßeinrichtung nach Anspruch 3, wobei die kombinierte Phasen-/Amplitudenstruktur (300) ausgebildete Abtast-Referenzmarkenstruktur (300) aus durchlässigen und undurchlässigen Teilbereichen (300d, 300u) besteht und in den durchlässigen Teilbereichen (300u) phasenschiebende Strukturen angeordnet sind.

5. Optische Positionsmeßeinrichtung nach Anspruch 1, wobei die Referenzimpuls-Ausgangssignale (RI_{T}, RI_{GT}) der beiden Block-Gruppen in Differenz geschaltet sind.

6. Optische Positionsmeßeinrichtung nach Anspruch 5, wobei die Referenzimpuls-Ausgangssignale (RI_{T}, RI_{GT}) an den Eingängen eines Differenzbildungselementes (DIF) anliegen.

7. Optische Positionsmeßeinrichtung nach Anspruch 1, wobei pro Block (BM1 - BM3; BM100 - BM400) der Maßstab-Referenzmarkenstruktur (10; 100; 400) und/oder pro Block (BA1 - BA3; BA100 - BA400) der Abtast-Referenzmarkenstruktur (20; 200) mehrere Teilbereiche angeordnet sind, die optisch durchlässig und undurchlässig ausgebildet sind.

8. Optische Positionsmeßeinrichtung nach Anspruch 1, wobei pro Block der Maßstab-Referenzmarkenstruktur und/oder pro Block der Abtast-Referenzmarkenstruktur mehrere Teilbereiche angeordnet sind, die optisch reflektierend und nicht-reflektierend ausgebildet sind.

9. Optische Positionsmeßeinrichtung nach Anspruch 1, wobei die Flächen der Detektorelemente (D1 - D3; D100 - D400) geringfügig größer als die Flächen der zugehörigen Blöcke (BM1 - BM3; BM100 - BM400; BA1 - BA3, BM100 - BM400) der Maßstab- und Abtast-Referenzmar kenstrukturen (10; 100; 20; 200) ausgebildet sind.

10. Optische Positionsmeßeinrichtung nach Anspruch 1, wobei eine gerade Anzahl von Blöcken der beiden Gruppen von Maßstab- und Abtast-Referenzmarkenstrukturen vorgesehen ist und die Flächen aller Blöcke von Maßstab- und Abtast-Referenzmarkenstrukturen identisch gewählt sind.

11. Optische Positionsmeßeinrichtung nach Anspruch 1, wobei eine ungerade Anzahl von Blöcken der beiden Gruppen von Maßstab- und Abtast-Referenzmarkenstrukturen vorgesehen ist und die Summe der Flächen der ersten Gruppe identisch zur Summe der Flächen der zweiten Gruppe der Maßstab- und Abtast-Referenzmarkenstrukturen gewählt sind.

## Claims

1. An optical position measuring device for determining the relative position of two objects, which are movable to one another in measuring direction (x), wherein a reference impulse signal (RI₂) can be generated at at least one defined relative position (X_{REF}) and the position measuring device comprises the following components:
a) a scale (M) comprising a scale reference mark structure (10; 100; 400), wherein the scale (M) is connected to one of the two objects and the scale reference mark structure (10; 100; 400) consists of n>2 of blocks (BM1, BM2, BM3; BM100, BM200, BM300, BM400), which are arranged adjacent to one another in measuring direction (x), which encompass successive arrangements in measuring direction (x) of a plurality of partial areas (10d, 10u; 100d, 100u; 400r, 400n) comprising different optical characteristics,
b) a scanning unit (AE), which is connected to the other object and which comprises a scanning plate (A) comprising a scanning reference mark structure (20; 200; 300) as well as a plurality of detector elements (D1, D2, D3; D100, D200, D300, D400), wherein
b1) the scanning reference mark structure (20; 200; 300) also consists of n blocks (BA1, BA2, BA3; BA100; BA200, BA300, BA400), which are arranged adjacent to one another successively in measuring direction (x) and
b2) wherein at least a first group of the blocks (BA2, BA100, BA300; BM2, BM100, BM300) of the scanning reference mark structure (20; 200; 300) or of the scale reference mark structure (10; 10; 400) is embodied such that it supplies an intensity distribution, which is identical to the structure of the corresponding first groups of blocks (BA2, BA100, BA300; BM2, BM100, BM300) of the scanning or scale reference mark structure (20; 200; 300; 10; 100; 400), at the reference position (X_{REF}), in response to an illumination by means of the light source (LQ) in the plane of the respective other reference mark structure, and at least a second group of the blocks (BA1, BA3, BA200, BA400; BM1, BM3, BM200, BM400) of the scanning or reference mark structure (20; 200; 300; 10; 100; 400) supplies an intensity distribution, which is complementary to the structure of the corresponding blocks (BA1, BA3, BA200, BA400; BM1, BM3, BM200, BM400) of the scanning or scale reference mark structure (20; 200; 300; 10; 100; 400) in response to an illumination by means of a light source (LQ), wherein one of the two groups comprises at least two blocks (BA1, BA3, BA100, BA300; BM1, BM3, BM100, BM300) and
b3) a detector element (D1-D3; D100-D400) is assigned to each block (BA1-BA3; BA100-BA400) from the scanning reference mark structure (20; 200; 300) and
b4) the detector elements (D1-D3; D100, D40) are interconnected such that the output signals (RI_{T}, RI_{GT}) of a block group are in each case connected to one another, for the purpose of which the detector elements (D1, D3; D100-D400) from groups comprising a plurality of blocks (BA1, BA3, BA100, BA300; BM1, BM3, BM100, BM300) are interconnected additively, so that a reference impulse output signal (RI_{T}, RIT_{GT}), which encompasses a maximum or a minimum in the case of a defined relative position (x_{REF}) of the two objects, results in each case from the output signals of each block group.

2. The optical position measuring device according to claim 1, wherein the scanning reference mark structure (20; 200) is embodied as a pure amplitude structure, which comprises an arrangement of partial areas (20d, 20u; 200d, 200u) comprising different optical characteristics in each block (BA1-BA3; BA100-BA400), wherein the arrangement of the partial areas (20d, 20u; 200d, 200u) in a first group of blocks (BA1, BA3; BA100, BA300) is identical to the arrangement of the partial areas (10d, 10u; 100d, 100u) in the corresponding blocks (BM1, BM3; BM100, BM300) of the scale reference mark structure (10; 100) and the arrangement of the partial areas (20d, 20u; 200d, 200u) in at least a second group of blocks (BA2; BA200, BA400) is complementary to the arrangement of the partial areas (10d, 10u; 100d, 100u) in the corresponding blocks (BM2; BM200, BM400) of the scale reference mark structure (10; 100).

3. The optical position measuring device according to claim 1, wherein the scanning reference mark structure (300) is embodied as phase structure or as combined phase/amplitude structure.

4. The optical position measuring device according to claim 3, wherein the scanning reference mark structure (300), which is embodied as combined phase/amplitude structure (300), consists of transparent and nontransparent partial areas (300d, 300u) and phase-shifting structures are arranged in the transparent partial areas (300u).

5. The optical position measuring device according to claim 1, wherein the reference impulse output signals (RI_{T}, RI_{GT}) of the two block groups are connected in difference.

6. The optical position measuring device according to claim 5, wherein the reference impulse output signals (RI_{T}, RI_{GT}) rest against the inputs of a difference computing element (DIF).

7. The optical position measuring device according to claim 1, wherein a plurality of partial areas, which are embodied so as to be optically transparent and nontransparent, are arranged for each block (BM1-BM3; BM100-BM400) of the scale reference mark structure (10; 100; 400) and/or for each block (BA1-BA3; BA100-BA400) of the scanning reference mark structure (20; 200).

8. The optical position measuring device according to claim 1, wherein a plurality of partial areas, which are embodied so as to be optically reflecting and non-reflecting, are arranged for each block of the scale reference mark structure and/or for each block of the scanning reference mark structure.

9. The optical position measuring device according to claim 1, wherein the surfaces of the detector elements (D1-D3; D100-D400) are embodied so as to be slightly larger than the surfaces of the corresponding blocks (BM1-BM3; BM100-BM400; BA1-BA3, BM100-BM400) of the scale and scanning reference mark structures (10; 100; 20; 200).

10. The optical position measuring device according to claim 1, wherein provision is made for an even number of blocks of the two groups of scale and scanning reference mark structures and the surfaces of all of the blocks of scale and scanning reference mark structures are chosen to be identical.

11. The optical position measuring device according to claim 1, wherein provision is made for an uneven number of blocks of the two groups of scale and scanning reference mark structures and the sum of the surfaces of the first group is chosen to be identical to the sum of the surfaces of the second group of the scale and scanning reference mark structures.

## Revendications

1. Dispositif de mesure de position optique, pour la détermination de la position relative de deux objets déplaçables l'un par rapport à l'autre dans la direction de mesurage (x), dans lequel un signal d'impulsion de référence (RI_{z}) peut être produit en au moins une position relative définie (x_{REF}), le dispositif de mesure de position comprenant les composants suivantes :
a) une graduation (M) avec une structure de repères de référence de graduation (10 ; 100 ; 400), la graduation (M) étant reliée à l'un des deux objets et la structure de repères de référence de graduation (10 ; 100 ; 400) est constituée de n > 2 blocs (BM1, BM2, BM3 ; BM100, BM200, BM300, BM400), disposés côte à côte dans la direction de mesurage (x) et comportant plusieurs régions partielles (10d, 10u ; 100d, 100u ; 400r, 400n) avec différentes caractéristiques optiques, disposées les unes à la suite des autres dans la direction de mesurage (x),
b) une unité de balayage (AE) reliée à l'autre objet, et une plaque de balayage (A) avec une structure de repères de référence de balayage (20 ; 200 ; 300), ainsi que plusieurs éléments détecteurs (D1, D2, D3 ; D100, D200, D300, D400), dans lequel
b1) la structure de repères de référence de balayage (20 ; 200 ; 300) est également constituée de blocs (BA1, BA2, BA3 ; BA100, BA200, BA300, BA400) disposés côte à côte dans la direction de mesurage (x), et
b2) dans lequel au moins un premier groupe de blocs (BA2, BA100, BA300 ; BM2, BM100, BM300) de la structure de repères de référence de balayage (20 ; 200 ; 300) ou de la structure de repères de référence de graduation (10 ; 100 ; 400) est conçu de manière à fournir, à la position de référence (x_{REF}), une répartition d'intensité qui est identique à la structure du premier groupe de blocs correspondant (BA2, BA100, BA300 ; BM2, BM100, BM300) de la structure de repères de référence de balayage ou de graduation (20 ; 200 ; 300 ; 10 ; 100 ; 400), lors d'un éclairage par une source de lumière (LQ) respectivement dans le plan de l'autre structure de repères de référence, et au moins un deuxième groupe de blocs (BA1, BA3, BA200, BA400 ; BM1, BM3, BM200, BM400) de la structure de repères de référence de balayage ou de graduation (20 ; 200 ; 300 ; 10 ; 100 ; 400) fournit une répartition d'intensité qui est complémentaire à la structure des blocs correspondants (BA1, BA3, BA200, BA400 ; BM1, BM3, BM200, BM400) de la structure de repères de référence de balayage ou de graduation (20 ; 200 ; 300 ; 10, 100 ; 400) de la structure de repères de référence de balayage ou de graduation (20 ; 200 ; 300 ; 10 ; 100 ; 400), lors d'un éclairage par une source lumière (LQ) respectivement dans le plan de l'autre structure de repères de référence, où l'un des deux groupes comprend au moins deux blocs (BA1, BA3, BA100, BA300 ; BM1, BM3, BM100, BM300), et
b3) un élément détecteur (D1 - D3 ; D100 - D400) est attribué à chaque bloc (BA1 - BA3 ; BA100 - BA400) de la structure de repères de référence de balayage (20 ; 200 ; 300), et
b4) les éléments détecteurs (D1 - D3 ; D100, D400) sont branchés de manière à ce que les signaux de sortie (RI_{T1}, RI_{GT}) d'un groupe de blocs soient reliés entre eux, ce pour quoi les éléments détecteurs (D1, D3 ; D100 - D400) de groupes avec plusieurs blocs (BA1, BA3, BA100, BA300 ; BM1, BM3, BM100, BM300) sont connectés entre eux de façon cumulative, de sorte qu'un signal d'impulsion de référence de sortie (RI_{T1}, RI_{GT}) présentant un maximum ou un minimum pour une position relative définie (x_{REF}) des deux objets résulte des signaux de sortie de chaque groupe de blocs.

2. Dispositif de mesure de position optique selon la revendication 1, dans lequel la structure de repères de référence de balayage (20 ; 200) est conçue comme une structure d'amplitudes comprenant, dans chaque bloc (BA1 - BA3 ; BA100 - BA400), un agencement de régions partielles (20d, 20u ; 200d, 200u) avec différentes caractéristiques optiques, où, dans un premier groupe de blocs (BA1, BA3 ; BA100, BA300), l'agencement des régions partielles (20d, 20u ; 200d, 200u) est identique à l'agencement des régions partielles (10d, 10u ; 100d, 100u) dans les blocs correspondants (BM1, BM3 ; BM100, BM300) de la structure de repères de référence de graduation (10 ; 100), et où, dans au moins un deuxième groupe de blocs (BA2 ; BA200, BA400), l'agencement des régions partielles (20d, 20u ; 200d, 200u) est complémentaire à l'agencement des régions partielles (10d, 10u ; 100d, 100u) dans les blocs correspondants (BM2 ; BM200, BM400) de la structure de repères de référence de graduation (10 ; 100).

3. Dispositif de mesure de position optique selon la revendication 1, dans lequel la structure de repères de référence de balayage (300) est conçue comme une structure de phases ou comme une structure d'amplitudes et de phases combinée.

4. Dispositif de mesure de position optique selon la revendication 3, dans lequel la structure de repères de référence de balayage (300) conçue comme une structure d'amplitudes et de phases combinée (300) est constituée de régions partielles (300d, 300u) transparentes et opaques, et des structures à décalage de phase sont agencées dans les régions partielles transparentes (300u).

5. Dispositif de mesure de position optique selon la revendication 1, dans lequel les signaux d'impulsion de référence de sortie (RI_{T1}, RI_{GT}) des deux groupes de blocs sont connectés en différence.

6. Dispositif de mesure de position optique selon la revendication 5, dans lequel les signaux d'impulsion de référence de sortie (RI_{T1}, RI_{GT}) sont appliqués aux entrées d'un élément de formation de différence (DIF).

7. Dispositif de mesure de position optique selon la revendication 1, dans lequel plusieurs régions partielles conçues optiquement transparentes ou opaques sont agencées dans chaque bloc (BM1 - BM3 ; BM100 - BM400) de la structure de repères de référence de graduation (10 ; 100 ; 400) et/ou dans chaque bloc (BA1 - BA3 ; BA100 - BA400) de la structure de repères de référence de balayage (20 ; 200).

8. Dispositif de mesure de position selon la revendication 1, dans lequel plusieurs régions partielles optiquement réfléchissantes ou non-réfléchissantes sont agencées dans chaque bloc de la structure de repères de référence de graduation et/ou dans chaque bloc de la structure de repères de référence de balayage.

9. Dispositif de mesure de position optique selon la revendication 1, dans lequel les surfaces des éléments détecteurs (D1 - D3 ; D100 - D400) sont conçues sensiblement plus grandes que les surfaces des blocs correspondants (BM1 - BM3 ; BM100 - BM400 ; BA1 - BA3 ; BA100 - BA400) des structures de repères de référence de graduation et de balayage (10 ; 100 ; 20 ; 200).

10. Dispositif de mesure de position optique selon la revendication 1, dans lequel il est prévu un nombre pair de blocs des deux groupes des structures de repères de référence de graduation et de balayage, et les surfaces de tous les blocs des structures de repères de référence de graduation et de balayage sont choisies identiques.

11. Dispositif de mesure de position selon la revendication 1, dans lequel il est prévu un nombre impair de blocs des deux groupes des structures de repères de référence de graduation et de balayage, et la somme des surfaces du premier groupe est choisie identique à la somme des surfaces du deuxième groupe des structures de repères de référence de graduation et de balayage.
